(19)

Europäisches
Patentamt
European
Patent Office
Office européen
des brevets

(11) **EP 3 312 141 A1**

(12) **EUROPEAN PATENT APPLICATION**
published in accordance with Art. 153(4) EPC

(43) Date of publication:
**25.04.2018 Bulletin 2018/17**

(21) Application number: **16849019.1**

(22) Date of filing: **23.09.2016**

(51) Int Cl.:
*C01B 32/19* (2017.01)          *C01B 32/21* (2017.01)
*B02C 19/00* (2006.01)          *B02C 19/06* (2006.01)

(86) International application number:
**PCT/KR2016/010699**

(87) International publication number:
**WO 2017/052294 (30.03.2017 Gazette 2017/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **25.09.2015  KR 20150137053**
**25.09.2015  KR 20150137054**

(71) Applicant: **LG Chem, Ltd.**
**Seoul 07336 (KR)**

(72) Inventors:
• **YOO, Kwang Hyun**
**Daejeon 34122 (KR)**

• **KIM, Eun Jeong**
**Daejeon 34122 (KR)**
• **KIM, In Young**
**Daejeon 34122 (KR)**
• **IM, Ye Hoon**
**Daejeon 34122 (KR)**
• **KWON, Won Jong**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **PLATE-SHAPED-MATERIAL EXFOLIATING APPARATUS COMPRISING MICROCHANNEL**

(57)    The present invention relates to an apparatus for exfoliating a plate-shaped material for exfoliating graphene, which has features that while a shear force required for the exfoliation of graphite is applied using a specific microchannel, it can simultaneously prevent the graphene itself from being crushed and increase the discharge flow rate of a graphene dispersion, thereby enhancing the production efficiency of graphene.

[FIG. 1]

EP 3 312 141 A1

**Description**

**[Technical Field]**

CROSS-REFERENCE TO RELATED APPLICATION(S)

This application claims the benefit of priority from Korean Patent Application No. 10-2015-0137053 filed on September 25, 2015 and Korean Patent Application No. 10-2015-0137054 filed on September 25, 2015 with the Korean Intellectual Property Office, the disclosures of which are incorporated herein by reference in their entirety.

The present invention relates to an apparatus for exfoliating a plate-shaped material which is effective in exfoliating graphite and capable of preparing large-area graphene and to a method for preparing graphene by using the apparatus.

**[Background Art]**

Graphene is a semimetallic material where carbon atoms form an arrangement connected in a hexagonal shape by two-dimensional sp2 bonding while having a thickness corresponding to a carbon atom layer. Recently, it has been reported that the properties of a graphene sheet having one carbon atomic layer were evaluated, and as a result, the graphene sheet may show very excellent electrical conductivity of electron mobility of about 50,000 cm$^2$/Vs or more.

Further, graphene has the properties of structural and chemical stability and excellent thermal conductivity. In addition, graphene is consisting of only carbon which is a relatively light element, and thus, easy to be processed in one-dimensional or two-dimensional nano-patterns. Due to such electrical, structural, chemical and economical properties, graphene is expected to replace a silicon-based semiconductor technology and a transparent electrode in the future, and especially, is possible to be applied to a flexible electronic device field due to excellent mechanical properties.

Due to the numerous advantages and excellent properties of graphene, various methods capable of more effective mass production of the graphene from carbon-based materials such as graphite, have been suggested or studied. In particular, a method capable of easily preparing a graphene sheet or flake, and having a smaller thickness and a large area has been studied in various ways, so that excellent properties of the graphene are more dramatically expressed.

As such existing methods of preparing graphene, there are known a method wherein graphite is exfoliated by a physical method such as using a tape or a chemical method such as oxidation, or a method wherein acid, base, metal, and the like are inserted between the graphite carbon layers and graphene or an oxide thereof are exfoliated from the intercalation compound. Recently, a method of preparing graphene by exfoliating carbon layers contained in graphite by a milling method using ultrasonic irradiation, a ball mill or the like, in a state of dispersing graphite and the like in liquid, is frequently employed. However, the above methods have disadvantages that defects of graphene are generated, or the process is complicated and the production yield of graphene is low.

Meanwhile, a high pressure homogenizing apparatus is an apparatus for applying a high pressure to a microchannel having a micrometer-scale diameter and applying a strong shear force to materials passing through the microchannel, and has an advantage that when this is used to exfoliate graphite, the production yield of graphene can be increased.

However, a high pressure homogenizing apparatus is generally designed and produced for the purpose of crushing and dispersing particles, and generally employs a microchannel having a short length and a very small cross sectional area. Consequently, there are disadvantages that graphene itself is broken since a too high shearing force is applied to graphite, and that the number of times of passing through the microchannel must be increased, and the flow rate is small, and thus the production efficiency is lowered.

Thus, the present inventors have conducted extensive and intensive studies on an apparatus for exfoliating a plate-shaped material which is effective in exfoliating graphite and capable of preparing large-area graphene, and as a result, found that the above-mentioned problems can be solved by using a microchannel having a specific shape as described below, thereby completing the present invention.

**[Disclosure]**

**[Technical Problem]**

It is an object of the present invention to provide an apparatus for exfoliating a plate-shaped material which is effective in exfoliating graphite and capable of mass production of large-area graphene.

In addition, it is another object of the present invention to provide a method for preparing graphene by using the apparatus for exfoliating a plate-shaped material.

**[Technical Solution]**

In order to achieve these objects, the present invention provides an apparatus for exfoliating a plate-shaped material, comprising:

an inlet to which a plate-shaped material is supplied;
a high-pressure pump that is provided at a front end of the inlet and generates a pressure for pressurizing the plate-shaped material;
a microchannel that is provided at the rear end of the inlet and performs exfoliation of the plate-shaped material while being passed though by a pressure generated by the high-pressure pump; and
an outlet that is provided at the rear end of the microchannel,
wherein the average shear force in the microchannel is $10^2$ s$^{-1}$ to $10^8$ s$^{-1}$ under the condition of applying 100 bar to 3000 bar to the microchannel.

In addition, the present invention provides a method for preparing graphene by using the apparatus for exfoliating a plate-shaped material, comprising: 1) a step of supplying a solution containing graphite to an inlet; 2) a step of applying a high pressure to the inlet by a high-pressure pump to pass the solution containing graphite through a microchannel; and 3) a step of recovering a graphene dispersion from an the outlet.

**[Advantageous Effects]**

The apparatus for exfoliating a plate-shaped material according to the present invention has features that while a shear force required for the exfoliation of graphite is applied using a specific microchannel, it can simultaneously prevent the graphene itself from being crushed and increase the discharge flow rate of a graphene dispersion, thereby enhancing the production efficiency of graphene.

**[BRIEF DESCRIPTION OF THE DRAWINGS]**

FIG. 1 shows a schematic diagram of an apparatus for exfoliating a plate-shaped material according to the present invention.
FIG. 2 shows the observation of the surface of graphene in a graphene dispersion prepared according to one example of the present invention.
FIG. 3 shows the size of graphene in a graphene dispersion prepared according to one embodiment of the present invention.
FIG. 4 shows SEM images of the graphene prepared according to the present invention.

**[DETAILED DESCRIPTION OF THE EMBODIMENTS]**

Hereinafter, the present invention is illustrated in detail.

**Apparatus for exfoliating a plate-shaped material**

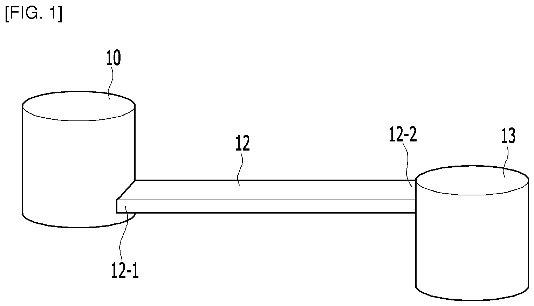

FIG. 1 shows a schematic diagram of an apparatus for exfoliating a plate-shaped material according to the present invention. The apparatus 1 for exfoliating a plate-shaped material according to the present invention comprises: an inlet 10 to which a plate-shaped material is supplied; a high-pressure pump 11 that is provided at a front end of the inlet 10 and generates a pressure for pressurizing the plate-shaped material; a microchannel 12 that is provided at the rear end of the inlet 10 and performs exfoliation of the plate-shaped material while being passed though by a pressure generated by the high-pressure pump; and an outlet 13 that is provided at the rear end of the microchannel.

A pressure is applied to the inlet 10 by the high-pressure pump 11 and the plate-shaped material supplied in the inlet 10 passes through the microchannel 12. Since the cross sectional area of the microchannel 12 is small, the flow speed in the microchannel 12 rapidly increases and the plate-shaped material receives a strong shear force to perform the exfoliation. The plate-shaped material that has passed through the microchannel 12 is discharged in the outlet 13.

In particular, in the present invention, the plate-shaped material is graphite, and an exfoliation can occur due to a strong shear force in the microchannel 12 to prepare graphene. The graphite includes a pure graphite as well as a graphite chemically treated for reducing an interlayer attraction in graphite.

For the exfoliation of graphite, the shear rate in the microchannel is important. According to a previous research paper (Keith R. Paton et al., "Scalable production of large quantities of defect-free few-layer graphene by shear exfoliation in liquids", Nature Materials 13, 624-630 (2014)), it has been reported that an exfoliation can occur when the shear rate appearing on an aqueous graphene solution is $10^4$ 1/s at the minimum. In general, the shear rate is represented by the following Equation 1.

[Equation 1]

$$\dot{\gamma} = du / dy$$

in the above equation, u is the fluid speed, y is the vertical distance to the surface on which the shear stress appears.

When Equation 1 is applied to a microchannel having a rectangular cross section, the average shear rate can be represented by the following Equation 2.

[Equation 2]

$$\dot{\gamma}_{avg} \sim U_{avg} / (H / 2)$$

in the above equation, $U_{avg}$ is the average fluid speed in the microchannel, and H is the height of the cross section of the microchannel.

Thus, the present invention is characterized in that the average shear rate in the microchannel is $10^2$ s$^{-1}$ to $10^8$ s$^{-1}$. Within the above range, it is possible to exfoliate a pure graphite or a graphite chemically treated for reducing interlayer attraction in graphite. More preferably, the average shear rate in a microchannel is $10^3$ s$^{-1}$ to $10^6$ s$^{-1}$, most preferably $10^4$ s$^{-1}$ to $10^6$ s$^{-1}$.

Meanwhile, a pressure is applied to the microchannel depending on the pressure of the high-pressure pump of the apparatus for exfoliating a plate-shaped material. In the present invention, the pressure applied to the microchannel is 100 bar to 3000 bar. When the pressure is less than 100 bar, there are problems that exfoliation of the plate-shaped material is difficult, or the cress-section of microchannel must be very small and thereby the production yield of graphene significantly decreases. In theory, the pressure can also exceed 300 bar, but there are problems that it is difficult to manufacture microchannel materials that can withstand these high pressures, and that a phenomenon occurs in which the plate-shaped material itself is crushed due to too high pressure.

In the present invention, therefore, there are features that the average shear rate in the microchannel is $10^2$ s$^{-1}$ to $10^8$ s$^{-1}$ in the range of 100 bar to 3000 bar which is a pressure applied to the microchannel, so that while a shear force required for the exfoliation of graphite is applied, it can simultaneously prevent the graphene itself from being crushed and increase the discharge flow rate of a graphene dispersion, thereby enhancing the production efficiency of graphene. More preferably, in the range of 100 bar to 3000 bar which is the pressure applied to the microchannel, the average shear rate in the microchannel is $10^3$ s$^{-1}$ to $10^6$ s$^{-1}$, most preferably $10^4$ s$^{-1}$ to $10^6$ s$^{-1}$.

As described above, the apparatus for exfoliating a plate-shaped material according to the present invention comprises a microchannel that can prevent the graphene itself from being crushed and increase the discharge flow rate of a graphene dispersion, thereby enhancing the production efficiency of graphene, within the range that a shear force required for the exfoliation of graphite is applied.

Further, as described above, the average shear rate in a microchannel is related to the height of the cross section of the microchannel. Here, the height means a minor axis when the microchannel has a rectangular cross section. Preferably, the minor axis of the cross section of the microchannel is 10 $\mu$m to 1000 mm. More preferably, the minor axis of the cross section of the microchannel is 100 $\mu$m or more, 200 $\mu$m or more, 400 $\mu$m or more, 500 $\mu$m or more, 1,000 $\mu$m or more, 4,000 $\mu$m or more, 5,000 $\mu$m or more, or 8,000 $\mu$m or more, and 100 mm or less, or 12,000 $\mu$m or less. Most preferably, the minor axis of the cross section of the microchannel is 50 $\mu$m to 20 mm. When the minor axis of the cross section of the microchannel is less than 10 $\mu$m, it becomes similar to the diameter (about 5 $\mu$m) of the graphene particles and thus a phenomenon in which the microchannel is clogged can occur. In addition, when the minor axis of the cross section of the microchannel is more than 1000 mm, it is difficult to realize a sufficient average shear rate even though the pressure applied to the microchannel is set to 3000 bar.

Further, preferably, the cross sectional area of the microchannel 12 is $1.00 \times 10^2$ $\mu$m$^2$ to $1.44 \times 10^8$ $\mu$m$^2$. More preferably, it is $1.00 \times 10^2$ $\mu$m$^2$ to $1.0 \times 10^8$ $\mu$m$^2$, most preferably $2.5 \times 10^3$ $\mu$m$^2$ to $1.0 \times 10^8$ $\mu$m$^2$.

Further, preferably, the cross section of the microchannel 12 is a rectangular shape. Preferably, the minor axis and major axis of the rectangular shape are 10 $\mu$m to 1000 mm, respectively. Preferably, the ratio of minor axis : major axis is 1:1 to 1:1000. More preferably, it is 1:1 to 1:100, 1:2 to 1:30, or 1:3 to 1:10.

The cross section of the microchannel 12 may be a rectangle or a square, and preferably a rectangle whose width is greater than the height. According to an embodiment of the present invention, in the case of increasing the width and height of the cross section at the same ratio when increasing the cross sectional area, the flow rate is increased but the average shear rate intends to decrease. However, in the case of fixing the height and increasing the width, it is possible to increase the flow rate without a substantial reduction in the average shear rate, and thus the productivity is increased and the exfoliating efficiency is improved. With a rectangular cross section, it is possible to achieve a high flow rate without a reduction in the average shear force as the cross sectional area increases within the height range of 10 $\mu$m to 1000 mm, unless the processing and installation space is limited.

Further, in order for the graphite to be effectively exfoliated by subjecting to the shear force, the length of the microchannel 12 must be secured for a certain length or more, and preferably, the length of the microchannel 12 is 2 mm or more. Even when the length of the microchannel 12 is 2 mm and the charged graphite is not completely exfoliated at one time, a satisfactory level of exfoliating efficiency can be achieved through reintroduction. In addition, the upper limit of the length of the microchannel 12 is preferably 10000 mm. When the length of the microchannel 12 exceeds 10000 mm, it is difficult to achieve a sufficient average shear rate even if the pressure applied to the microchannel is 3000 bar. Preferably, the upper limit of the length of the microchannel 12 is 2000 mm, or 1000 mm. More preferably, the length of the microchannel 12 is 10 mm to 500 mm.

The present inventors analyzed the flow inside the apparatus for exfoliating a plate-shaped material through a flow field simulation. As a result, it was found that the energy consumption appeared inside the apparatus for exfoliating a plate-shaped material is classified into the energy consumptions at the inlet of the microchannel (secondary loss), inside the microchannel (loss in straight pipe), and at the exit of the microchannel (secondary loss). It was also found that the cross sectional area of the channel rapidly changes at the inlet of the microchannel and the exit of the microchannel and thus the energy consumptions are large, and that energy consumption inside the microchannel is within about 5% of the total energy consumption. Based on such finding, the present inventors have confirmed that, even when the length of the microchannel is increased up to 10000 mm, a consumption of energy and a reduction in flow speed resulting therefrom are insignificant, and the shear stress required for the exfoliation of graphene is applied as it is.

In addition, the apparatus for exfoliating a plate-shaped material according to the present invention can be provided with a supply line that supplies a plate-shaped material to the inlet 10. It is possible to adjust the charging amount of the plate-shaped material or the like through the supply line.

**Method of Preparing Graphene**

In addition, the present invention provides a method of preparing graphene using the above-described apparatus for exfoliating a plate-shaped material, which comprises the following steps:

    1) a step of supplying a solution containing graphite to an inlet 10;
    2) a step of applying a pressure to the inlet 10 by a high-pressure pump 11 to pass the solution containing graphite through a microchannel 12; and
    3) a step of recovering a graphene dispersion from an outlet (13).

As described above in connection with the apparatus for exfoliating a plate-shaped material according to the present invention, the pressure in the step 2 is preferably 100 to 3000 bar. In addition, within the above pressure range, the average shear rate in a microchannel is $10^3$ s$^{-1}$ to $10^6$ s$^{-1}$, most preferably $10^4$ s$^{-1}$ to $10^6$ s$^{-1}$. The shape and length of microchannel for this purpose are the same as described above.

Further, after a graphene dispersion is recovered from the outlet 13, it can be reintroduced into the inlet 10. The reintroduction process can be repeated twice to thirty times. The reintroduction process can be carried out by repeatedly using the used apparatus for exfoliating a plate-shaped material or by using a plurality of the apparatuses for exfoliating plate-shaped materials. In addition, the reintroduction process may be separately carried out for each process, or carried out continuously.

Meanwhile, the method may further comprise a step of recovering and drying graphene from the graphene dispersion recovered. The recovering step may be carried out by centrifugation, vacuum filtration or pressure filtration. Further, the drying step may be carried out by vacuum drying or general drying at a temperature of about 30 to 200°C.

In addition, the size of graphene produced according to the present invention is large and uniform, which is advantageous in expressing characteristics inherent to graphene. By re-dispersing the prepared graphene in various solvents, it can be applied to various applications and uses such as a conductive paste composition, a conductive ink composition, a composition for forming a heat dissipation substrate, an electrically conductive composite, a thermally conductive composite, a composite for EMI shielding, a conductive material or slurry for a battery, and the like.

Hereinafter, preferred examples are presented to aid in understanding of the present invention. However, the following examples are provided only for illustrative purposes, and the scope of the present invention is not limited thereto.

**EXAMPLES 1-1 to 1-6**

**(1) Apparatus for exfoliating a plate-shaped material**

A microchannel as shown in FIG. 1 was used. An apparatus comprising an inlet 10, a microchannel 12 and an outlet 13 as shown in FIG. 1 was used. The inlet (10) and the outlet (13) used a cylindrical shape (1.5 mm in diameter and 2.5 mm in height), the michrochannel 12 used a microchannel having rectangular cross sections 12-1 and 12-2 with a width of 320 μm, a height of 100 μm and a length of 2400 μm.

**(2) Exfoliation of graphite**

2.5 g of graphite (BNB90) and 1 g of PVP58k (polyvinylpyrrolidone, weight average molecular weight: 58k) as a dispersant were mixed with 500 g of distilled water to prepare a feed solution.
The feed solution was introduced through the inlet 10 while applying a high pressure of 1,600 bar, the feed solution recovered from the outlet 13 was reintroduced in the inlet 10 and the high-pressure homogenization process was repeated. The high-pressure homogenization process was repeated total ten times to prepare a graphene dispersion.
The graphene dispersions was prepared in the same manner as in the Example 1-1, except that the pressure, the width and length of the cross section of the microchannel were used as shown in Table 1 below.

[Table 1]

|  | Applied pressure (bar) | Width and length of the cross section of microchannel (μm×μm) |
|---|---|---|
| Example 1-1 | 1,600 | 320 × 100 |
| Example 1-2 | 1,100 | 320 × 100 |
| Example 1-3 | 600 | 320 × 100 |
| Example 1-4 | 600 | 180 × 75 |
| Example 1-5 | 600 | 310 × 100 |
| Example 1-6 | 600 | 490 × 125 |

**(3) Observation of Graphene Surface**

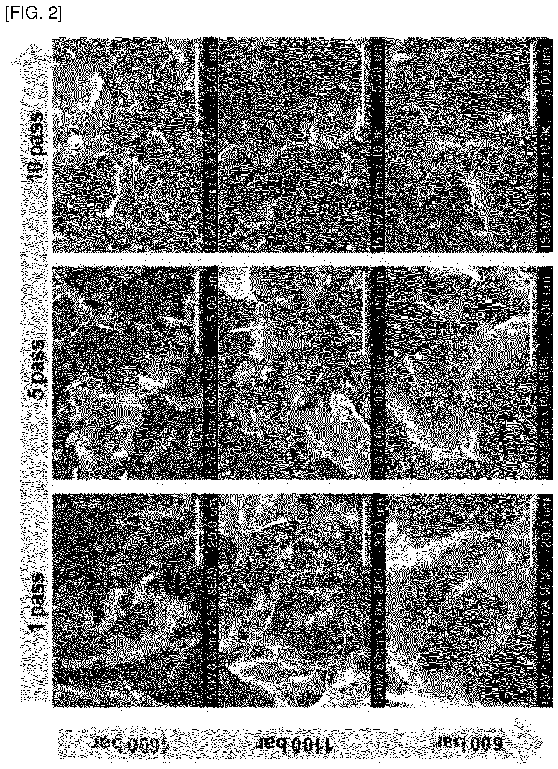

The surfaces of graphene in each sample obtained in the above Examples were confirmed by SEM images, and the results were shown in FIG. 2.

**(4) Comparison of Graphene Sizes**

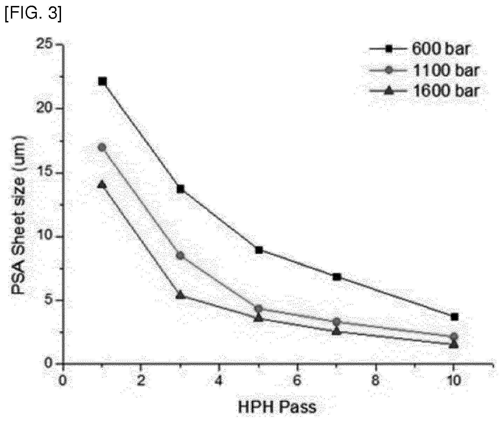

The sizes of graphene in each sample obtained in the Examples were measured. Specifically, as for each sample, the lateral size distribution of graphene dispersed was measured with a particle size analyzer (LA-960 Laser Particle Size Analyzer), and the results were shown in Table 2 and FIG. 3.

[Table 2]

| Number of times of high pressure homogenization treatment and recovery | Average size of Graphene (μm) | | |
|---|---|---|---|
|  | Example 1-1 | Example 1-2 | Example 1-3 |
| 1 time | 14.03 | 16.97 | 22.19 |
| 3 times | 5.37 | 8.49 | 13.76 |
| 5 times | 3.58 | 4.33 | 8.98 |
| 7 times | 2.56 | 3.32 | 6.87 |
| 10 times | 1.53 | 2.14 | 3.72 |

As shown in Table 2 and FIG. 3, it could be confirmed that the graphene size was decreased as the pressure is increased and the number of times of high-pressure homogenization was increased.

**(5) Comparison of Discharge Flow Rate**

In Examples 1-4 to 1-6 carried out by applying the same pressure (600 bar), the discharge flow rate from the outlet 13 was measured and the results are shown in Table 3 below.

[Table 3]

|  | Discharge flow rate of graphene dispersion (mL/min) |
|---|---|
| Example 1-4 | 145 |
| Example 1-5 | 360 |
| Example 1-6 | 540 |

As shown in Table 3, it could be confirmed that as the cross sectional area of microchannel was increased, the discharge flow rate of graphene dispersion was increased. It could also be confirmed that, as the pressure is increased and the number of times of high-pressure homogenization was increased, the graphene size was decreased.

**Example 1-7: Comparison of the average shear rate and the flow rate depending on the cross sectional area of microchannel**

In order to compare the average shear rate and the flow rate depending on the cross section shape of microchannel, the microchannel having cross section shapes as in Tables 4 to 10 were produced and analyzed through a flow field simulation.

**(1) Square cross section, Inlet pressure of 100 bar, microchannel length of 2000 $\mu$m**

[Table 4]

| Cross section height of channel ($\mu$m) | Cross section width of channel ($\mu$m) | Cross sectional area of channel ($\mu$m$^2$) | Average shear rate (1/s) | Discharge flow rate (L/min) |
|---|---|---|---|---|
| 100 | 100 | $1.0\times10^4$ | $1.94\times10^6$ | 0.1 |
| 500 | 500 | $2.5\times10^5$ | $4.50\times10^5$ | 1.7 |
| 1000 | 1000 | $1.0\times10^6$ | $2.28\times10^5$ | 6.8 |
| 2000 | 2000 | $4.0\times10^6$ | $1.15\times10^5$ | 27.6 |

**(2) Square cross section, inlet pressure of 500 bar, microchannel length of 2000 $\mu$m**

[Table 5]

| Cross section height of channel ($\mu$m) | Cross section width of channel ($\mu$m) | Cross sectional area of channel ($\mu$m$^2$) | Average shear rate (1/s) | Discharge flow rate (L/min) |
|---|---|---|---|---|
|  |  |  |  |  |
| 100 | 100 | $1.0\times10^4$ | $4.4\times10^6$ | 0.12 |
| 200 | 200 | $4.0\times10^4$ | $2.4\times10^6$ | 0.54 |
| 400 | 400 | $1.6\times10^5$ | $1.2\times10^6$ | 2.4 |
| 800 | 800 | $6.4\times10^5$ | $6.4\times10^5$ | 9.78 |
| 1000 | 1000 | $1.0\times10^6$ | $5.1\times10^5$ | 15.3 |
| 4000 | 4000 | $1.6\times10^7$ | $1.3\times10^5$ | 247.26 |
| 6000 | 6000 | $3.6\times10^7$ | $8.6\times10^4$ | 556.92 |

**(3) Square cross section, inlet pressure of 1500 bar, microchannel length of 2000 $\mu$m**

[Table 6]

| Cross section height of channel ($\mu$m) | Cross section width of channel ($\mu$m) | Cross sectional area of channel ($\mu$m$^2$) | Average shear rate (1/s) | Discharge flow rate (L/min) |
|---|---|---|---|---|
| 100 | 100 | $1.0\times10^4$ | $7.7\times10^6$ | 0.24 |
| 200 | 200 | $4.0\times10^4$ | $4.2\times10^6$ | 1.02 |
| 400 | 400 | $1.6\times10^5$ | $2.2\times10^6$ | 4.2 |
| 1000 | 1000 | $1.0\times10^6$ | $8.9\times10^5$ | 26.52 |
| 4000 | 4000 | $1.6\times10^7$ | $2.2\times10^5$ | 428.4 |
| 8000 | 8000 | $6.4\times10^7$ | $1.1\times10^5$ | 1716 |

**(4) Square cross-section, inlet pressure of 3000 bar, microchannel length of 2000 $\mu$m**

[Table 7]

| Cross section height of channel ($\mu$m) | Cross section width of channel ($\mu$m) | Cross sectional area of channel ($\mu$m$^2$) | Average shear rate (1/s) | Discharge flow rate (L/min) |
|---|---|---|---|---|
| 10 | 10 | $1.0\times10^2$ | $4.69\times10^7$ | 0.001 |
| 100 | 100 | $1.0\times10^4$ | $1.1\times10^7$ | 0.3 |
| 200 | 200 | $4.0\times10^4$ | $5.9\times10^6$ | 1.44 |
| 400 | 400 | $1.6\times10^5$ | $3.1\times10^6$ | 5.88 |
| 500 | 500 | $2.5\times10^5$ | $2.48\times10^6$ | 9.31 |
| 4000 | 4000 | $1.6\times10^7$ | $3.2\times10^5$ | 606 |
| 5000 | 5000 | $2.5\times10^7$ | $2.53\times10^5$ | 947.5 |
| 10000 | 10000 | $1.0\times10^6$ | $1.26\times10^5$ | 3792.5 |
| 12000 | 12000 | $1.44\times10^8$ | $1.05\times10^5$ | 5462 |

**(5) Rectangular cross-section, inlet pressure of 500 bar, microchannel length of 2000 $\mu$m**

[Table 8]

| Cross section height of channel ($\mu$m) | Cross section width of channel ($\mu$m) | Cross sectional area of channel ($\mu$m$^2$) | average shear rate (1/s) rate (1/s) | Discharge flow rate (L/min) |
|---|---|---|---|---|
| 100 | 100 | $1.0\times10^4$ | $4.36\times10^6$ | 0.12 |
| 100 | 400 | $4.0\times10^4$ | $4.67\times10^6$ | 0.54 |
| 100 | 900 | $9.0\times10^4$ | $4.73\times10^6$ | 1.26 |
| 100 | 1600 | $1.6\times10^5$ | $4.75\times10^6$ | 2.28 |

**(6) Rectangular cross-section, inlet pressure of 1500 bar, microchannel length of 2000 $\mu$m**

[Table 9]

| Cross section height of channel ($\mu$m) | Cross section width of channel ($\mu$m) | Cross sectional area of channel ($\mu$m$^2$) | Average shear rate (1/s) | Discharge flow rate (L/min) |
|---|---|---|---|---|
| 100 | 100 | $1.0 \times 10^4$ | $7.68 \times 10^6$ | 0.24 |
| 100 | 400 | $4.0 \times 10^4$ | $8.18 \times 10^6$ | 0.96 |
| 100 | 900 | $9.0 \times 10^4$ | $8.27 \times 10^6$ | 2.22 |
| 100 | 1600 | $1.6 \times 10^5$ | $8.30 \times 10^6$ | 3.96 |

**(7) Rectangular cross-section, inlet pressure of 3000 bar, microchannel length of 2000 $\mu$m**

[Table 10]

| Cross section height of channel ($\mu$m) | Cross section width of channel ($\mu$m) | cross-sectional area of channel | Average shear rate (1/s) | Discharge flow rate (L/min) |
|---|---|---|---|---|
| 100 | 100 | $1.0 \times 10^4$ | $1.10 \times 10^7$ | 0.3 |
| 100 | 400 | $4.0 \times 10^4$ | $1.16 \times 10^7$ | 1.38 |
| 100 | 900 | $9.0 \times 10^4$ | $1.18 \times 10^7$ | 3.18 |
| 100 | 1600 | $1.6 \times 10^5$ | $1.18 \times 10^7$ | 5.64 |

**EXAMPLES 2-1 to 2-4**

**(1) Apparatus for exfoliating a plate-shaped material**

A microchannel as shown in FIG. 1 was used. An apparatus comprising an inlet 10, a microchannel 12 and an outlet 13 as shown in FIG. 1 was used. The inlet 10 and the outlet 13 used a cylindrical shape (1.5 mm in diameter and 2.5 mm in height), the microchannel 12 used a microchannel having a rectangular cross-sections 12-1 and 12-2 with a width of 320 $\mu$m, a height of 100 $\mu$m and a length of 2400 $\mu$m. In addition, the pressure of inlet 10, and the width, height and length of the microchannel 12 are specifically the same as in Table 11 below.

**(2) Exfoliation of graphite**

2.5 g of graphite (BNB90) and 1 g of PVP58k (polyvinylpyrrolidone, weight average molecular weight: 58k) as a dispersant were mixed with 500 g of distilled water to prepare a feed solution. The feed solution was introduced through the inlet 10 while applying a high-pressure of 730 bar, and the feed solution was recovered from the outlet 13. In addition, the average shear rate and flow speed of the microchannel were analyzed through a rheological field simulation.

[Table 11]

| | Example 2-1 | Example 2-2 | Example 2-3 | Example 2-4 |
|---|---|---|---|---|
| Inlet pressure (bar) | 500 | 500 | 3000 | 3000 |
| Width of microchannel ($\mu$m) | 4000 | 4000 | 12000 | 12000 |
| Height of microchannel ($\mu$m) | 4000 | 4000 | 12000 | 12000 |
| Length of microchannel (mm) | 2 | 60 | 2 | 60 |
| Average flow speed in microchannel (m/s) | 257 | 244 | 632 | 624 |
| Average shear rate in microchannel (1/s) | $1.29 \times 10^5$ | $1.22 \times 10^5$ | $1.05 \times 10^5$ | $1.04 \times 10^5$ |

When the average shear rate was substantially larger than $10^5$ 1/s, a satisfactory level of graphene exfoliation was performed. As shown in Table 11 above, even when the microchannel length was 60 mm or more as in Examples 2-2 and 2-4, the shear force required for the exfoliation of graphene could be maintained, and thus it was confirmed that the section to which the shear force was subjected could become more long to reduce the number of times of passing through microchannel and the productivity can be improved.

**EXAMPLES 2-5**

Graphite was exfoliated in the same manner as in Example 2-1 except that the length of the microchannel was set to 2.4 mm and 12 mm, respectively.

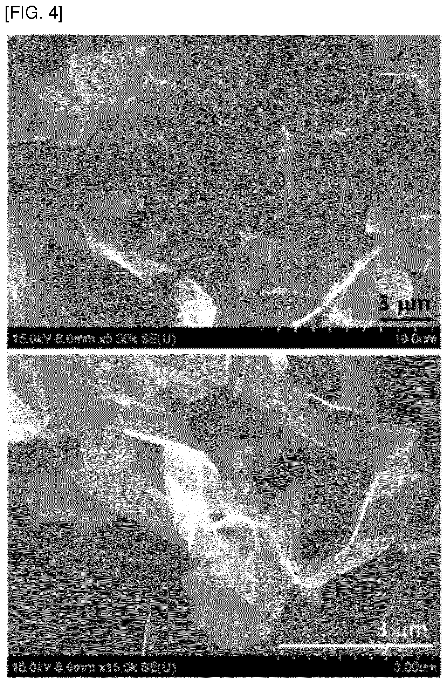

The surfaces of graphene thus obtained were confirmed by SEM images, and the result was shown in FIG. 4. In FIG. 4, the microchannel having a length of 12 mm was used, and graphene was exfoliated very thinly and thus it appeared to be transparent, or folded parts are founded.

In addition, the sizes of graphene in the obtained samples were measured. Specifically, for each sample, the lateral size distribution of graphene dispersed was measured with a particle size analyzer (LA-960 Laser Particle Size Analyzer), and the results were shown in FIG. 3. As shown in FIG. 3, it was confirmed that when the length of microchannel was longer, the size of graphene was larger.

**Example 2-7: Comparison of the average shear rate and the flow rate depending on the cross sectional area of micro-channels**

In order to compare the average shear rate and the flow rate depending on the cross-sectional shape of the microchannel, the microchannel having cross-sectional shape as shown in Tables 12 to 14 were produced and analyzed through a flow field simulation.

(1) Square cross-section, inlet pressure of 3000 bar

[Table 12]

| Cross section Height of channel ($\mu$m) | Cross section width of channel ($\mu$m) | Length of channel (mm) | Cross sectional area of channel ($\mu$m$^2$) | Average Shear rate (1/s) | Discharge Flow rate (L/min) |
|---|---|---|---|---|---|
| 12000 | 12000 | 1,000 | $1.44\times10^8$ | $8.65\times10^4$ | 4486 |

(2) Square section, inlet pressure of 3000 bar

[Table 13]

| Cross section height of channel ($\mu$m) | Cross section width of channel ($\mu$m) | Length of channel (mm) | Cross sectional area of channel ($\mu$m$^2$) | Average shear rate (1/s) | Flow rate discharged (L/min) |
|---|---|---|---|---|---|
| 100 | 100 | 1,000 | $1.0\times10^4$ | $7.70\times10^5$ | 0.023 |
| 100 | 100 | 5,000 | $1.0\times10^4$ | $3.75\times10^5$ | 0.011 |
| 100 | 100 | 10,000 | $1.0\times10^4$ | $1.88\times10^5$ | 0.006 |

(3) Square section, inlet pressure of 3000 bar

[Table 14]

| Cross section height of channel ($\mu$m) | Cross section width of channel ($\mu$m) | Length of channel (mm) | Cross sectional area of channel ($\mu$m$^2$) | Average shear rate (1/s) | Flow rate discharged (L/min) |
|---|---|---|---|---|---|
| 10 | 10 | 20 | $1.0 \times 10^2$ | $9.32 \times 10^6$ | 0.00028 |
| 10 | 10 | 200 | $1.0 \times 10^2$ | $9.37 \times 10^6$ | 0.00003 |
| 10 | 10 | 1,000 | $1.0 \times 10^2$ | $1.87 \times 10^5$ | 0.00001 |

**[Explanation of sign]**

1: Apparatus for exfoliating a plate-shaped material
10: Inlet
11: High pressure pump
12: Microchannel
12-1: Front end of microchannel
12-2: Rear end of microchannel
13: Outlet

**Claims**

1.  An apparatus for exfoliating a plate-shaped material, comprising:

    an inlet to which a plate-shaped material is supplied;
    a high-pressure pump that is provided at a front end of the inlet and generates a pressure for pressurizing the plate-shaped material;
    a microchannel that is provided at the rear end of the inlet and performs exfoliation of the plate-shaped material while being passed though by a pressure generated by the high-pressure pump; and
    an outlet that is provided at the rear end of the microchannel,
    wherein the average shear force in the microchannel is $10^2$ s$^{-1}$ to $10^8$ s$^{-1}$ under the condition of applying 100 bar to 3000 bar to the microchannel.

2.  The apparatus for exfoliating a plate-shaped material according to claim 1, wherein the average shear force in the microchannel is $10^3$ s$^{-1}$ to $10^6$ s$^{-1}$.

3.  The apparatus for exfoliating a plate-shaped material according to claim 1, wherein the average shear force in the microchannel is $10^4$ s$^{-1}$ to $10^6$ s$^{-1}$.

4.  The apparatus for exfoliating a plate-shaped material according to claim 1, wherein the minor axis of the cross section of the microchannel is 10 $\mu$m to 1000 mm.

5.  The apparatus for exfoliating a plate-shaped material according to claim 1, wherein the minor axis of the cross section of the microchannel is 50 $\mu$m to 20 mm.

6.  The apparatus for exfoliating a plate-shaped material according to claim 1, wherein the cross sectional area of the microchannel is $1.00 \times 10^2$ $\mu$m$^2$ to $1.44 \times 10^8$ $\mu$m$^2$.

7.  The apparatus for exfoliating a plate-shaped material according to claim 1, wherein the cross sectional shape of the microchannel is rectangle.

8.  The apparatus for exfoliating a plate-shaped material according to claim 7, wherein the ratio of minor axis : major axis of the rectangle is 1:1 to 1:1000.

9. The apparatus for exfoliating a plate-shaped material according to claim 7, wherein the ratio of minor axis : major axis of the rectangle is 1:1 to 1:100.

10. The apparatus for exfoliating a plate-shaped material according to claim 1, wherein the length of the microchannel is 2 mm or more.

11. The apparatus for exfoliating a plate-shaped material according to claim 1, wherein the length of the microchannel is 2 mm to 10000 mm.

12. The apparatus for exfoliating a plate-shaped material according to claim 1, wherein the length of the microchannel is 10 mm to 500 mm.

[FIG. 1]

[FIG. 2]

[FIG. 3]

[FIG. 4]

## INTERNATIONAL SEARCH REPORT

International application No.

**PCT/KR2016/010699**

| A. | CLASSIFICATION OF SUBJECT MATTER |
|---|---|

*C01B 31/04(2006.01)i, B02C 19/00(2006.01)i, B02C 19/06(2006.01)i*

According to International Patent Classification (IPC) or to both national classification and IPC

| B. | FIELDS SEARCHED |
|---|---|

Minimum documentation searched (classification system followed by classification symbols)

C01B 31/04; B01J 19/10; H01B 1/04; C01B 31/02; B02C 19/00; B02C 19/06

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: sheet material, graphite, peeling device, high pressure pump, micro channel, graphene manufacturing, shearing force

| C. | DOCUMENTS CONSIDERED TO BE RELEVANT | |
|---|---|---|
| Category* | Citation of document, with indication, where appropriate, of the relevant passages | Relevant to claim No. |
| X | NACKEN, T. J. et al., "Delamination of Graphite in a High Pressure Homogenizer", RSC Advances, 2015, vol. 5, no. 71, pages 57328-57338 (Published online: 23 June 2015) See page 57329, left column, line 25-right column, line 19; page 57331, right column, lines 33-36; and figure 1. | 1-12 |
| X | KR 10-2015-0076093 A (LG CHEM, LTD.) 06 July 2015 See paragraphs [0057]-[0065]; and figure 1. | 1-12 |
| A | EP 2495216 A2 (N-BARO TECH. CO., LTD.) 05 September 2012 See claims 1-26; and figures 1-5. | 1-12 |
| A | KR 10-1264316 B1 (KOREA ELECTROTECHNOLOGY RESEARCH INSTITUTE) 22 May 2013 See abstract; claims 1-3, 5-10, 12-14; and figure 1. | 1-12 |
| A | TOLLE, Folke Johannes et al., "Emulsifier-free Graphene Dispersions with High Graphene Content for Printed Electronics and Freestanding Graphene Films", Advanced Functional Materials, 2012, vol. 22, no. 6, pages 1136-1144 See abstract; pages 1136, 1137; and diagram 1. | 1-12 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 JANUARY 2017 (02.01.2017) | **02 JANUARY 2017 (02.01.2017)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

## INTERNATIONAL SEARCH REPORT

International application No.

**PCT/KR2016/010699**

C (Continuation).    DOCUMENTS CONSIDERED TO BE RELEVANT

| Category* | Citation of document, with indication, where appropriate, of the relevant passages | Relevant to claim No. |
|---|---|---|
| A | PATON, Keith R. et al., "Scalable Production of Large Quantities of Defect-free Few-layer Graphene by Shear Exfoliation in Liquids", Nature Materials, 2014, vol. 13, no. 6, pages 624-630 See abstract; and pages 625, 626. | 1-12 |

Form PCT/ISA/210 (continuation of second sheet) (January 2015)

EP 3 312 141 A1

INTERNATIONAL SEARCH REPORT
Information on patent family members

International application No.

**PCT/KR2016/010699**

| Patent document cited in search report | Publication date | Patent family member | Publication date |
|---|---|---|---|
| KR 10-2015-0076093 A | 06/07/2015 | CN 105873858 A | 17/08/2016 |
| | | EP 3056468 A1 | 17/08/2016 |
| | | KR 10-1666478 B1 | 14/10/2016 |
| | | WO 2015-099378 A1 | 02/07/2015 |
| EP 2495216 A2 | 05/09/2012 | CN 102471068 A | 23/05/2012 |
| | | CN 102471068 B | 17/09/2014 |
| | | EP 2493812 A1 | 05/09/2012 |
| | | EP 2493812 A4 | 02/10/2013 |
| | | EP 2495216 A4 | 23/10/2013 |
| | | KR 10-1053933 B1 | 04/08/2011 |
| | | KR 10-1337970 B1 | 06/12/2013 |
| | | KR 10-2011-0016420 A | 17/02/2011 |
| | | KR 10-2011-0036721 A | 08/04/2011 |
| | | US 2012-0201738 A1 | 09/08/2012 |
| | | US 8968695 B2 | 03/03/2015 |
| | | WO 2011-019095 A1 | 17/02/2011 |
| | | WO 2011-019184 A2 | 17/02/2011 |
| | | WO 2011-019184 A3 | 16/06/2011 |
| KR 10-1264316 B1 | 22/05/2013 | KR 10-2012-0049679 A | 17/05/2012 |

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150137053

- JP 1020150137054 B

**Non-patent literature cited in the description**

- **KEITH R. PATON et al.** Scalable production of large quantities of defect-free few-layer graphene by shear exfoliation in liquids. *Nature Materials,* 2014, vol. 13, 624-630